# EUROPEAN PATENT APPLICATION

(11) **EP 2 637 455 A2**
(43) Date of publication of application: **11.09.2013**
(21) Application number: 13158076.3
(22) Date of filing: 07.03.2013
(51) Int. Cl.: H04W 48/18

(54) **Apparatus and method for network connection in portable terminal**

(30) Priority: 07.03.2012 KR 20120023477
(71) Applicant: Samsung Electronics Co., Ltd, Gyeonggi-do 443-742 (KR)
(72) Inventor: Lee, Shin-Duck, 443-742 Gyeonggi-do (KR); Lee, Chang-Hwan, 443-742 Gyeonggi-do (KR); Lee, Jong Pil, 443-742 Gyeonggi-do (KR); Lee, Chang-Hun, 443-742 Gyeonggi-do (KR)
(74) Representative: Nederlandsch Octrooibureau

(57) **Abstract**

An apparatus and a method of connecting a portable terminal to a network, by which a specific network can be connected to through selection of a user, are provided. The apparatus includes a display unit for informing of a state of nonconnection to a specific network and for displaying a menu item for connecting to the specific network, and a controller for controlling the portable terminal so as to search for and to connect to the specific network through selection of the menu item for connecting to the specific network when the portable terminal is not connected to the specific network.

## Description

### BACKGROUND OF THE INVENTION

### Field of the Invention:

The present invention relates to an apparatus and a method of connecting a portable terminal to a network. More particularly, the present invention relates to an apparatus and a method of connecting a portable terminal to a network, by which a specific network can be connected to through selection of a user.

### Description of the Related Art:

When a portable terminal supporting 4G (e.g., Long-Term Evolution (LTE)) accesses a 2G or 3G (e.g., Wideband Code Division Multiple Access (WCDMA)) network, the portable terminal may carry out the handover by receiving a neighbor cell measurement information message, such as System Information type 2 quater (SI2quater) or PSI3quater, from the currently accessed 2G or 3G (e.g., WCDMA) network, and by receiving qualities of neighbor cells through the neighbor cell measurement information message.

However, if service providers have not upgraded the existing 2G (e.g., Global System for Mobile Communication (GSM)) network being used or the 3G (e.g., Wideband Code Division Multiple Access (WCDMA)) network being used due to issues of stability, expenses, etc., even if the 4G (e.g., LTE) network exists in a neighbor area, the portable terminal may not be able to be connected through the 4G (e.g., LTE) network because the 2G (e.g., GSM) network does not measure the 4G (e.g., LTE) network.

Accordingly, even though the 4G (e.g., LTE) network exists in a neighbor area, a user of the portable terminal cannot use the 4G (e.g., LTE) network and the user may consider that the portable terminal has a problem.

Therefore, a need exists for an apparatus and a method of connecting a portable terminal to a network, by which a specific network can be connected to through selection of a user.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address the above-mentioned problems and/or disadvantages and to provide at least the advantages described below. Accordingly, an aspect of the present invention is to provide an apparatus and a method of connecting to a network in a portable terminal.

Also, another aspect of the present invention is to provide an apparatus and a method of connecting a portable terminal to a network, which informs a user of a connection failure of a network having a high priority when information on the network having the high priority is not received in a currently connected network and allows the user to search for and connect to the network having the high priority.

In accordance with an aspect of the present invention, an apparatus for connecting a portable terminal to a network is provided. The apparatus includes a display unit for informing of a state of non-connection to a specific network and for displaying a menu item for connecting to the specific network; and a controller for controlling the portable terminal so as to search for and to connect to the specific network through selection of the menu item for connecting to the specific network when the portable terminal is not connected to the specific network.

In accordance with another aspect of the present invention, an apparatus for connecting a portable terminal to a network is provided. The apparatus includes a display unit for informing of a state of connection to a specific network and for displaying an icon for connecting to the specific network; and a controller for controlling the portable terminal so as to search for and to connect to the specific network through selection of the icon for connecting to the specific network when the portable terminal is not connected to the specific network.

In accordance with another aspect of the present invention, an apparatus for connecting a portable terminal to a network is provided. The apparatus includes a display unit for informing of a state of non-connection to a specific network and for displaying a network change mode for connecting to the specific network; and a controller for controlling the portable terminal such that a network change mode for connecting to the specific network is provided when the portable terminal camps on a different network.

In accordance with another aspect of the present invention, a method of connecting a portable terminal to a network is provided. The method includes when the portable terminal cannot connect to a specific network, searching for and making connection to the specific network through selection of a menu item for connecting to the specific network.

In accordance with another aspect of the present invention, a method of connecting a portable terminal to a network is provided. The method includes determining whether the portable terminal is connected to a specific network; and when the portable terminal is not connected the specific network, searching for and making connection to the specific network through selection of an icon for connecting to the specific network.

In accordance with another aspect of the present invention, a method of connecting a portable terminal to a network is provided. The method includes determining a state of connection to a specific network as the portable terminal camps on a different network; and providing a network change mode for connecting to the specific network when the portable terminal is connected to the specific network.

Accordingly, the aspects of the present invention is to provide the apparatus and the method of connecting a portable terminal to a network, so that when information on a network having a high priority is not received in a currently connected network, the present invention informs a user of a connection failure of the network having the high priority and allows the user to search for and connect to the network having the high priority.

Further, when information on an LTE neighbor cell is not included in the SI2quater message or the PSI3quater message in the camp-on to the 2G (GSM) network or the 3G (WCDMA) network, the present invention informs the user of relevant information and gives a choice to the user without violating a specification of a corresponding network, thereby conveniently processing the network problem in the portable terminal.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a block diagram illustrating a portable terminal according to exemplary embodiments of the present invention.
FIG. 2 is a flowchart illustrating a process of connecting a portable terminal to a network according to a first exemplary embodiment of the present invention.
FIGs. 3A to 3C illustrate the process of connecting a portable terminal to a network according to the first exemplary embodiment of the present invention.
FIGs. 4A and 4B are flowcharts illustrating a process of connecting a portable terminal to a network according to a second exemplary embodiment of the present invention.
FIGs. 5A to 5C illustrate the process of connecting a portable terminal to a network according to a second exemplary embodiment of the present invention.

Throughout the drawings, it should be noted that like reference numbers are used to depict the same or similar elements, features, and structures.

### DETAILED DESCRIPTION OF THE EXEMPLARY

### EMBODIMENT

The following description with reference to the drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

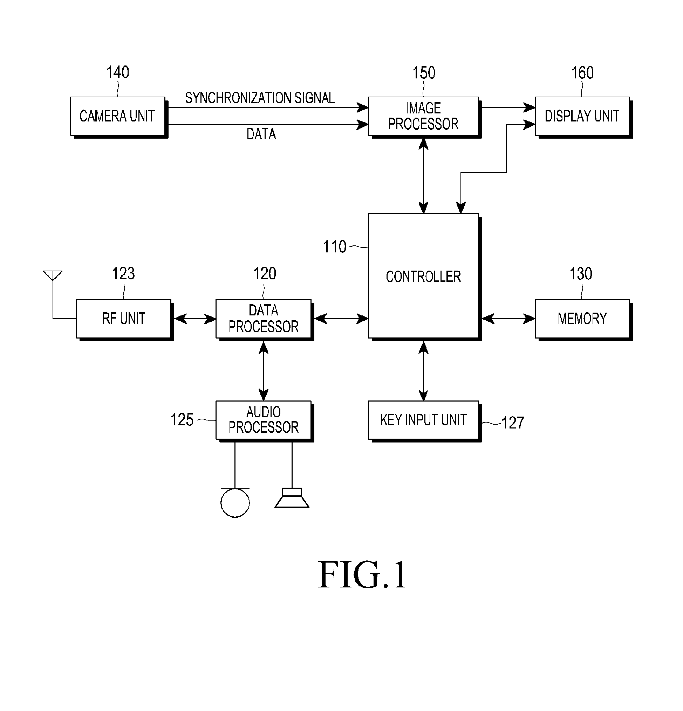

FIG. 1 is a block diagram illustrating a portable terminal according to exemplary embodiments of the present invention.

Referring to FIG. 1, a Radio-Frequency (RF) unit 123 performs a wireless communication function of the portable terminal. The RF unit 123 includes an RF transmitter for up-converting a frequency of a transmitted signal and for amplifying a transmitted signal and an RF receiver for low-noise amplifying a received signal and for down-converting a frequency of a received signal. A data processor 120 includes a transmitter for encoding and for modulating the transmitted signal and a receiver for demodulating and for decoding the received signal. For example, the data processor 120 may include a modem and a codec. The codec includes a data codec for processing packet data, and the like, and an audio codec for processing an audio signal, such as, for example, a voice. An audio processor 125 performs a function of reproducing a received audio signal output from the audio codec of the data processor 120 and/or a function of transmitting a transmitted audio signal generated from a microphone to the audio codec of the data processor 120.

A key input unit 127 includes keys for inputting number and character information and function keys for setting various functions. As an example, the key input 127 may be a touch screen by which the information and/or functions may be input.

A memory 130 may be configured with a program memory and a data memory. The program memory may store programs for controlling a general operation of the portable terminal and programs for controlling the portable terminal such that a network having a high priority is searched for and connected to through selection of a user when information on the network having the high priority is not received in a currently connected network according to exemplary embodiments of the present invention. Further, the data memory performs a function of temporary storage of data generated during the execution of the programs.

A controller 110 operatively controls a general operation of the portable terminal. According to exemplary embodiments of the present invention, the controller 110 controls the portable terminal such that a specific network is searched for and connected to through selection of a menu item allowing the connection to the specific network when the portable terminal is not otherwise connected thereto. For example, the controller 110 may have a connection to any one of a 2G (e.g., Global System for Mobile Communication (GSM)) network, a 3G (e.g., Code Division Multiple Access (CDMA)) network, and a 4G (e.g., Long-Term Evolution (LTE)) network, and the specific network may be the 4G (e.g., LTE) network assigned the high priority.

According to a first exemplary embodiment of the present invention, when the portable terminal is not connected to a specific network that is a network having the high priority in a network automatic connection mode, the controller 110 may control the portable terminal such that the network having the high priority is searched for and connected to through selection of an icon associated with the connection to the network having the high priority.

The controller 110 searches for all networks (the 2G (e.g., GSM) network, the 3G (e.g., CDMA) network, and the 4G (e.g., LTE) network), and in the network automatic connection mode in which the portable terminal is connected to a registerable network among all networks, the controller 110 operatively displays an icon for the connection to the specific network indicating non-connection to the specific network when the portable terminal is not connected to the network having the high priority, and operatively displays an icon for the connection to the specific network indicating connection to the specific network when the portable terminal is connected to the specific network through the selection of the icon for the connection to the specific network.

Further, the controller 110 searches for the network having the high priority through the selection of the icon for the connection to the network having the high priority in the network automatic connection mode, and when the network having the high priority is not found, the controller 110 searches for all networks (e.g., the 2G (GSM) network, the 3G (CDMA) network, the 4G (LTE) network, and the like) and operatively controls the portable terminal such that the portable terminal is connected to a registerable network among all networks, if any.

According to a second exemplary embodiment of the present invention, when information on a network, serving as a specific network and having a high priority, is not received in a state in which the portable terminal camps on a network having a low priority, the controller 110 operatively controls the portable terminal such that the network having the high priority selected by a user in a network change mode is searched for and connected to the portable terminal.

When a neighbor cell measurement information message for the network having the low priority is received in the state in which the portable terminal camps on the network having the low priority, the controller 110 determines whether the neighbor cell measurement information message comprises information on a neighbor cell for the network having the high priority. In this case, the portable terminal may receive an SI2quater message as the neighbor cell measurement information message when the portable terminal is in a state of camping on the 2G (e.g., GSM) network, and the portable terminal may receive a PSI3quater message as the neighbor cell measurement information message when the portable terminal is in a state of camping on the 3G (e.g., WCDMA) network.

When the neighbor measurement information message does not comprise the information on the neighbor cell for the network having the high priority, the controller 110 informs the user that the information on the network having the high priority is not received and operatively displays a message making an inquiry about a change to the network having the high priority. When the user makes a request for the change to the network having the high priority, the controller 110 controls the portable terminal such that the mode is changed to the network change mode.

The controller 110 operatively displays the types of networks in the network change mode and operatively controls the portable terminal such that the portable terminal searches for and connects to the network having the high priority selected from the types of networks by the user or searches for and connects to a network selected by the user. As an example, the types of network change modes include the automatic connection mode for searching for all networks (e.g., 2G, 3G, and 4G (LTE) networks) and connecting to the registerable network among all networks if any, a 2G (e.g., GSM only) mode for the connection to only the 2G (e.g., GSM) network, a 3G (e.g., WCDMA only) mode for the connection to only the 3G (e.g., WCDMA) network, and a 4G (e.g., LTE only) mode for the connection to only the 4G (e.g., LTE) network.

A camera unit 140 is configured to photograph image data. The camera unit 140 includes a camera sensor for converting a photographed optical signal to an electrical signal, and a signal processor for converting an analog image signal photographed by the camera sensor to digital data. For example, it may be assumed that the camera sensor is a Charge Coupled Device (CCD) sensor or a Complementary Metal-Oxide-Semiconductor (CMOS) sensor, and the signal processor may be implemented with a Digital Signal Processor (DSP). Further, the camera sensor may be integrally formed with or independently formed from the signal processor.

An image processor 150 performs an Image Signal Processing (ISP) for displaying an image signal output from the camera unit 140 on a display unit 160, and the ISP performs functions including gamma correction, interpolation, spatial change, image effect, image scale, Auto White Balance (AWB), Auto Exposure (AE), Auto Focus (AF), and the like. Accordingly, the image processor 150 processes the image signal output from the camera unit 140 in the unit of frames and outputs image data in the unit of frames in accordance with a property and a size of the display unit 160. Further, the image processor 150 includes an image codec and performs a function of compressing the image data in the unit of frames displayed on the display unit 160 according to a determined scheme or reconstructing the compressed image data in the unit of frames into an original image data in the unit of frames. Here, the image codec may include a Joint Photographic Experts Group (JPEG) codec, a Motion Picture Experts Group 4 (MPEG4) codec, a Wavelet codec, and the like. As an example, it may be assumed that the image processor 150 includes an On Screen Display (OSD) function, and the image processor 150 may output OSD data in accordance with a size of a displayed screen under the control of the controller 110.

The display unit 160 displays an image signal output from the image processor 150 on a screen and displays user data output from the controller 110 on the screen. As an example, the display unit 160 may be a Liquid Crystal Display (LCD) and include an LCD controller, a memory for storing image data, and an LCD diode. If the LCD is implemented in a touch screen scheme (e.g., if a touch screen is incorporated into the LCD), then the LCD may function as an input unit. For example, the display unit 160 may display keys like the key input unit 127.

Further, according to an exemplary embodiment of the present invention, the display unit 160 may inform the user of a state of non-connection to the specific network (e.g. the network having the high priority), and/or may display a menu item (e.g. an icon) for the connection to the network having the high priority or a network change mode for displaying the types of networks.

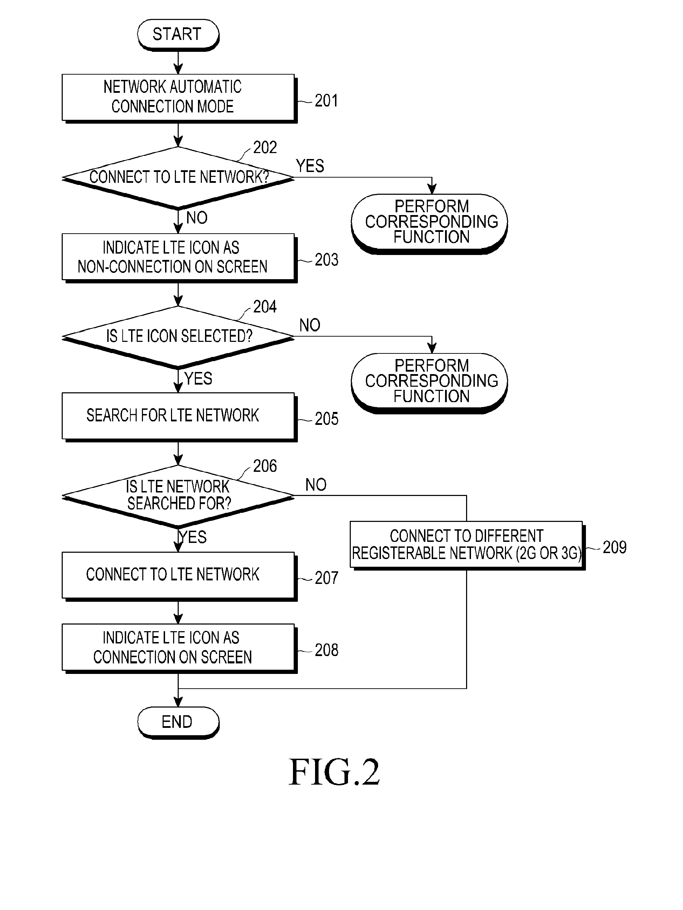

An operation of a network connection in the portable terminal will be described in detail with reference to FIGs. 2 to 5.

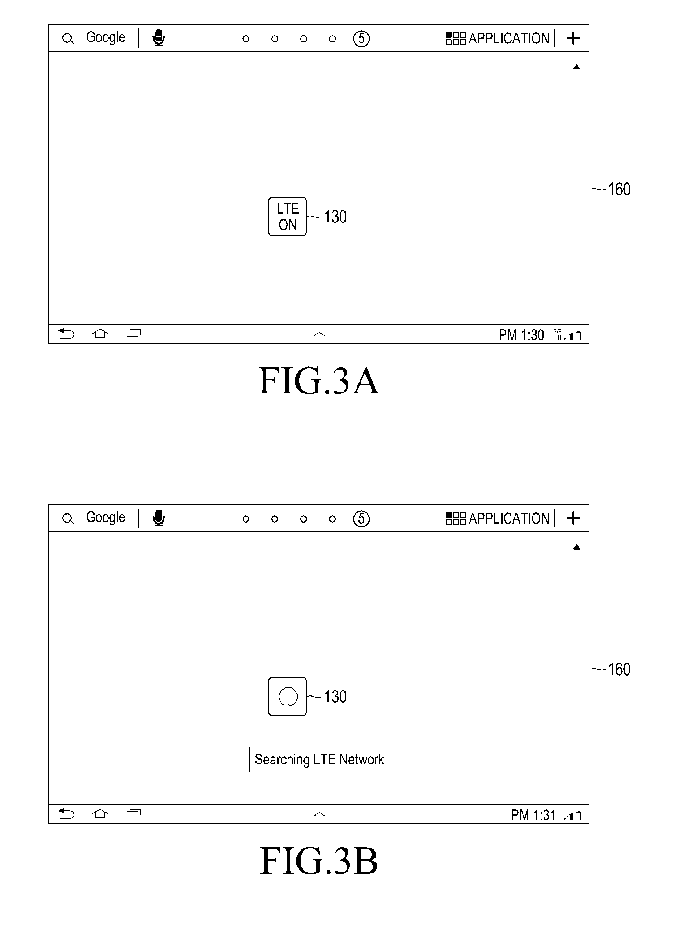

FIG. 2 is a flowchart illustrating a process of connecting a portable terminal to a network according to the first exemplary embodiment of the present invention. FIGs. 3A to 3C illustrate the process of connecting a portable terminal to a network according to the first exemplary embodiment of the present invention. The first exemplary embodiment of the present invention is described based on an example in which the 4G (e.g., LTE) network is assigned the highest priority among the 2G (e.g., GSM) network, the 3G (e.g., WCDMA) network, and the 4G (e.g., LTE) network to which the portable terminal may connect, and when the portable terminal is not connected to the 4G (e.g., LTE) network, the portable terminal makes an attempt to connect to the 4G (e.g., LTE) network through the selection of the user.

Hereinafter, the exemplary embodiment of the present invention will be described in detail with further reference to FIG. 1.

Referring to FIG. 2, at step 201, the controller 110 searches for all networks (e.g., the 2G, 3G, and 4G (e.g., LTE) networks), and when there is an accessible network (e.g., when the controller 110 determines that there is an accessible network), the controller 110 determines whether the portable terminal is connected to the 4G (e.g., LTE) network having the high priority in the network automatic connection mode for registering and connecting to the accessible network.

At step 202, the portable terminal determines whether it is connected to the 4G (e.g., LTE) network. For example, at step 202, the controller 110 determines whether the portable terminal is connected to the 4G (e.g., LTE) network. When the portable terminal is not connected to the 4G (e.g., LTE) network, the controller 110 detects non-connection to the 4G (e.g., LTE) network in step 202, and the process of connecting the portable terminal to a network proceeds to step 203 in which the portable terminal displays on the screen an indication as to non-connection to the 4G (e.g., LTE) network. For example, the portable display may display an LTE icon for indicating a direct connection to the 4G (e.g., LTE) network installed with the widgets is indicated as non-connection.

When the LTE icon indicating non-connection to the 4G (e.g., LTE) network is selected by the user in step 203, the controller 110 detects the selection of the LTE icon in step 204 and the process of connecting the portable terminal to a network proceeds to step 205 at which the controller 110 searches for the 4G (e.g., LTE) network.

According to an exemplary embodiment of the present invention, even though the controller 110 does not change the portable terminal from the network automatic connection mode selected by the user to the LTE mode for selecting only the LTE network, the controller 110 may search for the 4G (e.g., LTE) network by giving the highest priority to the 4G (e.g., LTE) network and through Equivalent PLMN (EPLMN) information. The EPLMN information, which is information received from a previously registered network (Registered PLMN (RPLMN)), means a PLMN having the priority equivalent to that of the RPLMN.

When the 4G (LTE) network is found, the controller 110 detects that the 4G (e.g., LTE) network is found in step 206 and the process of connecting the portable terminal to a network proceeds to step 207 at which the portable terminal connects to the 4G (e.g., LTE) network. As an example, at step 207, the controller 110 may operatively connect the portable terminal to the 4G (e.g., LTE) network. When the portable terminal is connected to the 4G (LTE) network, the process of connecting the portable terminal to a network proceeds to step 208 at which the controller 110 operatively displays the LTE icon indicating connection to the network. For example, the controller 110 operatively displays the LTE icon installed with the widgets for indicating the direct connection to the 4G (e.g., LTE) network with different colors, shapes, or types, so that a current state of the connection to the 4G (e.g., LTE) network may be informed of to the user. For example, the portable terminal may inform the user of the state of the connection to the 4G (e.g., LTE) network by using icons of various colors, shapes, types, or the like.

Conversely, when the 4G (e.g., LTE) network is not found, the controller 110 detects that the 4G (e.g., LTE) network is not found in step 206 and the process of connecting the portable terminal to a network proceeds to step 209 at which the portable terminal searches for and connects to a connectable network (e.g., a 2G or a 3G (e.g., WCDMA) network). For example, at step 209, the controller 110 searches for and connects to a connectable network.

Referring to FIGs. 3A to 3C, the LTE icon 130 installed with the widgets for indicating the direct connection to the 4G (e.g., LTE) network is displayed on the screen of the display unit 160. As illustrated in FIG. 3A, the LTE icon 130 indicates the non-connection of the portable terminal to the 4G (e.g., LTE) network because the portable terminal is in a state of being currently connected to the 3G (e.g., WCDMA) network.

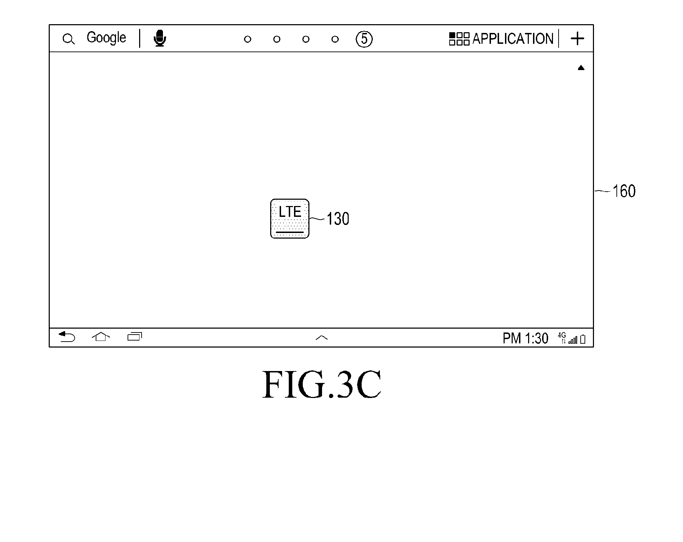

As illustrated in FIG. 3B, when the LTE icon 130 is selected by the user while the LTE icon 130 indicates as the non-connection of the portable terminal to the 4G (e.g., LTE) network as illustrated in FIG. 3A, the LTE icon 130 is configured to indicate that the 4G (e.g., LTE) network being currently searched for. When portable terminal connects to the 4G (e.g., LTE) network after searching for the 4G (e.g., LTE) network as illustrated in FIG. 3B, the LTE icon 130 is configured to indicate the connection of the portable terminal to the 4G (e.g., LTE) network as illustrated in FIG. 3C.

When the LTE icon 130 is selected by the user during a time when the LTE icon 130 is indicates that the portable terminal is connected to the 4G (e.g., LTE) network as illustrated in FIG. 3C, the controller 110 may release the connection to the 4G (e.g., LTE) network and may operatively display the LTE icon 130 so as to indicate the non-connection of the portable terminal to the 4G (e.g., LTE) network, as illustrated in FIG. 3A, and the controller 110 may search for and connect to a connectable 3G (e.g., WCDMA) network.

As illustrated in FIGs. 2 and 3, when the user desires to connect the portable terminal to the 4G (e.g., LTE) network when the portable terminal is in a state in which the portable terminal is not connected to the specific network (e.g. the 4G (e.g., LTE) network), the user may make an attempt to connect to the 4G (e.g., LTE) network by directly selecting the widgets. The user may connect the portable terminal to the 4G (e.g., LTE) network by directly selecting a corresponding icon such as, for example, the LTE icon 130.

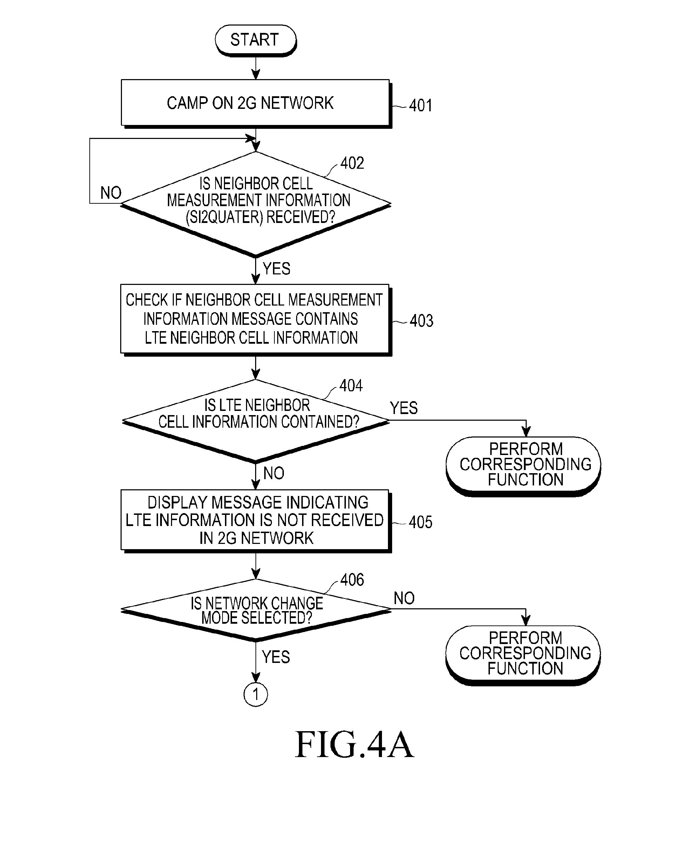

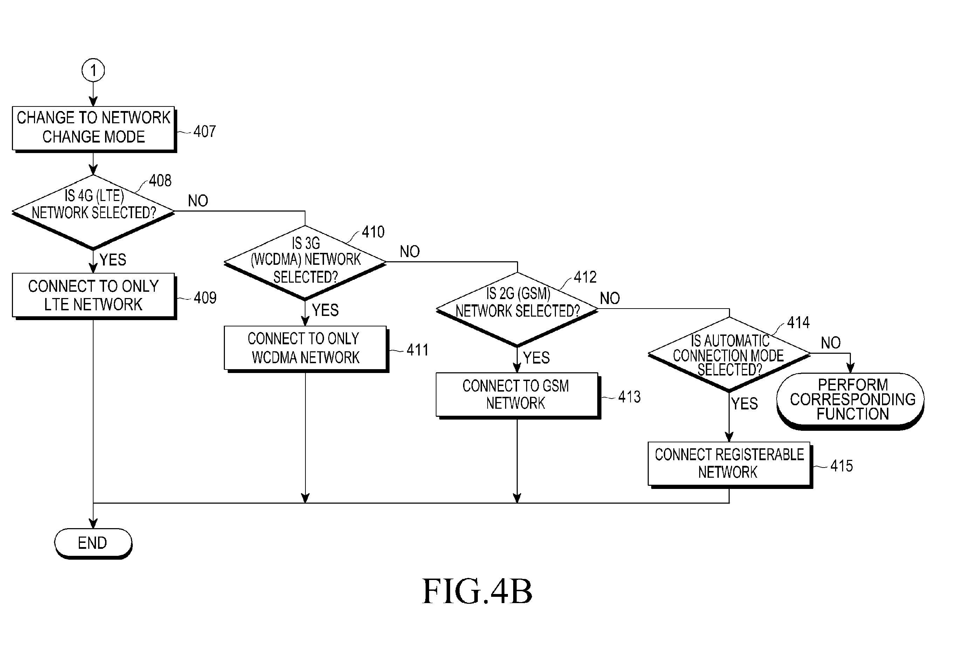

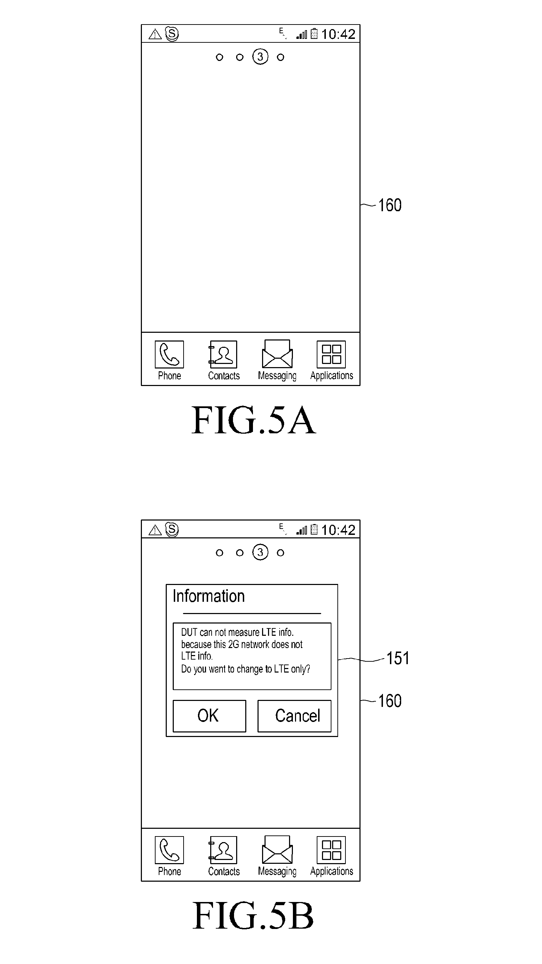

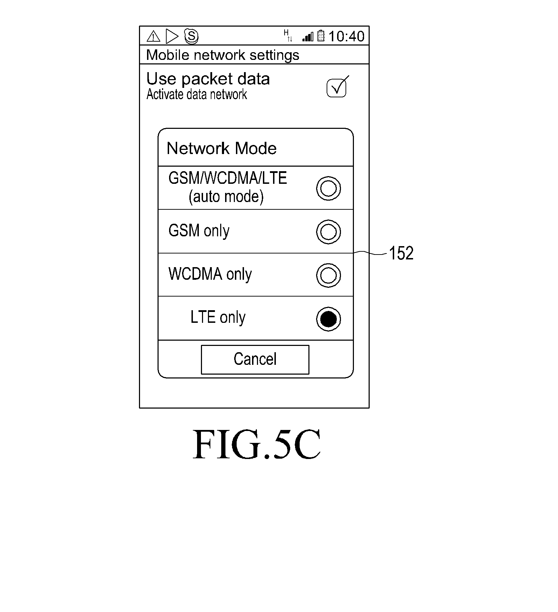

FIGs. 4A and 4B are flowcharts illustrating a process of connecting a portable terminal to a network according to a second exemplary embodiment of the present invention. FIGs. 5A to 5C illustrate the process of connecting a portable terminal to a network according to a second exemplary embodiment of the present invention.

The second exemplary embodiment of the present invention is described based on an example in which the connection to the 4G (LTE) network is attempted based on the selection by the user when information on a neighbor cell for the 4G (e.g., LTE) network among the 2G (e.g., GSM) network, the 3G (e.g., WCDMA) network, and the 4G (e.g., LTE) network connectable to the portable terminal is not received.

The second exemplary embodiment of the present invention will be described with further reference to FIG. 1 in detail.

Referring to FIGs. 4A and 4B, when an system information type 2 quater (SI2quater) message that is a neighbor cell measurement information message is received from the 2G (e.g., GSM) network in step 401 in which the portable terminal is in a state of camping on the 2G (e.g., GSM) network, the controller 110 detects the reception of the SI2quater message in step 402 and the process of connecting a portable terminal to the network proceeds to step 403 at which the portable terminal determines whether the received neighbor cell measurement information message includes LTE neighbor cell information as the neighbor cell information. For example, at step 403, the controller 110 may determine whether the neighbor cell information of the neighbor cell measurement information message includes LTE neighbor cell information.

When the received neighbor cell measurement information message includes the LTE neighbor cell information, the controller 110 detects that the received neighbor cell measurement information message includes LTE neighbor cell information in step 404 and the process of connecting a portable terminal to the network proceeds to step 405 at which the portable terminal displays a message indicating that the LTE information is not received. For example, the portable terminal may display a message making an inquiry about a change to the network change mode for changing to the LTE network because the LTE information is not currently provided to the 2G (e.g., GSM) network.

When the network change mode is selected by the user during the display of the message at step 405, the controller 110 detects the selection of the network change mode in step 406 and the process of connecting a portable terminal to the network proceeds to step 407 at which the portable terminal changes to the network change mode. The controller may display the types of networks on the screen of the display unit 160 in the network change mode. As an example, the types of networks include the automatic connection mode for the connection to the registerable network among all networks (e.g., 2G, 3G, and 4G (LTE) networks), a 2G (e.g., GSM only) mode for the connection to only the 2G (e.g., GSM) network, a 3G (e.g., WCDMA only) mode for the connection to only the 3G (e.g., WCDMA) network, and a 4G (e.g., LTE only) mode for the connection to only the 4G (e.g., LTE) network.

When the 4G (e.g., LTE) network is selected in the network change mode of displaying the types of networks, the controller 110 detects the selection of the 4G (e.g., LTE) network in step 408 and the process of connecting the portable terminal to a network proceeds to step 409 at which the portable terminal searches for and connects to only the 4G (e.g., LTE) network.

Otherwise, when the 3G (e.g., WCDMA) network is selected in the network change mode, the controller 110 detects the selection of the 3G (e.g., WCDMA) network in step 410 and the process of connecting the portable terminal to a network proceeds to step 411 of searching for and connecting to only the 3G (e.g., WCDMA) network.

Otherwise, when the 2G (e.g., GSM) network is selected in the network change mode, the controller 110 detects the selection of the 2G (e.g., GSM) network in step 412 and the process of connecting the portable terminal to a network proceeds to step 413 at which the portable terminal searches for and connects to only the 2G (e.g., GSM) network.

Otherwise, when the automatic connection mode (e.g., GSM/WCDMA/LTE) is selected in the network change mode, the controller 110 detects the selection of the automatic connection mode (e.g., GSM/WCDMA/LTE) in step 414 and the process of connecting the portable terminal to a network proceeds to step 415 at which the portable terminal searches for all networks (e.g., 2G, 3G, and 4G (LTE) networks) and connects to the registerable network among all networks (e.g., 2G, 3G, and 4G (LTE) networks) if any.

Referring to FIGs. 5A to 5C illustrating the process of connecting a portable terminal to a network, if the SI2quater message received from the 2G (e.g., GSM) network does not include the LTE neighbor cell information in a state in which the portable terminal camps on the 2G (e.g., GSM) network as illustrated in FIG. 5A, then the controller 110 operatively displays a message making an inquiry about the change to the LTE network because the LTE information is not currently received, as illustrated in FIG. 5B. In this event, when an OK button is selected, the controller 110 searches for all networks (e.g., 2G, 3G, and 4G (LTE) networks) and operatively displays the network change mode including the automatic connection mode (e.g., GSM/WCDMA/LTE) for the connection to the registerable network among them if any, the 2G (e.g., GSM only) mode for the connection to only the 2G (e.g., GSM) network, the 3G (e.g., WCDMA only) mode for the connection to only the 3G (e.g., WCDMA) network, and the 4G (e.g., LTE only) mode for the connection to only the 4G (LTE) network on the screen. The user may change the network mode to a desired network mode, as well as the 4G (e.g., LTE only) mode for the connection to only the 4G (e.g., LTE) network, through the network change mode.

As illustrated in FIGs. 4A, 4B, and 5A to 5C, when the user desires to connect to the 4G (e.g., LTE) network in a state in which the information on the specific network (e.g. the 4G (LTE) network), is not received, the user may change the network mode to a desired network mode, as well as the 4G (e.g., LTE only) mode for the connection to only the 4G (e.g., LTE) network, through the aforementioned network change mode.

While the invention has been shown and described with reference to certain exemplary embodiments thereof, it will be understood by those skilled in the art that that various changes in form and details may be made therein without departing from the spirit and scope of the invention as defined by the claims or their equivalents.

## Claims

1. An apparatus for connecting a portable terminal to a network, the apparatus comprising:
a display unit for informing of a state of non-connection to a specific network and for displaying a menu item for connecting to the specific network; and
a controller for controlling the portable terminal so as to search for and to connect to the specific network through selection of the menu item for connecting to the specific network when the portable terminal is not connected to the specific network.

2. The apparatus as claimed in claim 1, wherein the portable terminal is connectable to any one of a 2G (Global System for Mobile Communication (GSM)) network, a 3G (Wideband Code Division Multiple Access (WCDMA)) network, and a 4G (Long-Term Evolution (LTE)) network, and
wherein the specific network is the 4G (LTE) network assigned a highest priority.

3. The apparatus as claimed in claim 1, wherein the controller controls the portable terminal such that when the portable terminal is not connected to a network having a high priority when the portable terminal is in a network automatic connection mode, the network having the high priority is searched for and connected to through selection of an icon associated with connection to a network having a high priority.

4. The apparatus as claimed in claim 3, wherein the controller controls the portable terminal such that the icon associated with the connection to the network having the high priority is configured to indicate non-connection of the portable terminal when the portable terminal cannot connect to the network having the high priority, and the icon associated with the connection to the network having the high priority is configured to indicate connection of the portable terminal when the portable terminal is connected to the network having the high priority.

5. The apparatus as claimed in claim 3, wherein the controller controls the portable terminal such that the portable terminal searches for and connects to the network having the high priority upon the selection of the icon associated with the connection to the network having the high priority in the network automatic connection mode for connection to a corresponding network according to a priority of the network, and such that the portable terminal searches for and connects to a different registerable network when the network having the high priority is not found.

6. The apparatus as claimed in claim 3, wherein the network automatic connection mode is a mode for searching for all 2G, 3G, and 4G networks and connecting to a registerable network among the networks.

7. The apparatus as claimed in claim 1, wherein the controller controls the portable terminal such that when the portable terminal does not receive information on a network having a high priority as the portable terminal camps on a network having a low priority, the portable terminal searches for and connects to the network having the high priority selected by a user in a network change mode.

8. The apparatus as claimed in claim 7, wherein the controller controls the portable terminal such that the controller determines whether a neighbor cell measurement information message includes information on a neighbor cell for the network having the high priority when the portable terminal receives the neighbor cell measurement information message for the network having the low priority as the portable terminal camps on the network having the low priority, it is informed that information on the network having the high priority is not received and such that the controller operatively displays a message making an inquiry about a change to the network having the high priority when the neighbor cell measurement information message does not include the information on the neighbor cell for the network having the high priority, and such that the controller changes the portable terminal to the network change mode when the change to the network having the high priority is requested.

9. The apparatus as claimed in claim 7, wherein the controller controls the portable terminal such that the portable terminal displays the types of networks when the portable terminal is in the network change mode and the portable terminal searches for and connects to a network selected from the types of networks by the user.

10. The apparatus as claimed in claim 9, wherein the types of networks comprise an automatic connection mode for searching for all 2G, 3G, and 4G networks and for connecting to a registerable network among the networks, a 2G mode for connection to only the 2G network, a 3G mode for connection to only the 3G network, and a 4G mode for connection to only the 4G network.

11. A method of connecting to a portable terminal to a network, the method comprising:
when the portable terminal cannot connect to a specific network, searching for and making connection to the specific network through selection of a menu item for connecting to the specific network.

12. The method as claimed in claim 11, wherein the portable terminal is connectable to any one of a 2G (Global System for Mobile Communication (GSM)) network, a 3G (Wideband Code Division Multiple Access (WCDMA)) network, and a 4G (Long-Term Evolution (LTE)) network, and
wherein the specific network is the 4G (LTE) network assigned a highest priority.

13. The method as claimed in claim 11, wherein the making of the connection to the specific network comprises:
displaying an icon associated with connection to a network having a high priority when the portable terminal is not connected to the network having the high priority in a network automatic connection mode; and
when the icon for connection to the network having the high priority is selected, searching for and connecting to the network having the high priority.

14. The method as claimed in claim 13, wherein the icon associated with connection to the network having the high priority is configured to indicate non-connection of the portable terminal when the portable terminal cannot connect to the network having the high priority, and the icon associated with connection to the network having the high priority is configured to indicate connection of the portable terminal when the portable terminal is connected to the network having the high priority.

15. The method as claimed in claim 13, further comprising searching for and making connection to a different registerable network when the portable terminal does not find the network having the high priority as the portable terminal is in the network automatic connection mode for connecting to a corresponding network according to a priority of the network.

16. The method as claimed in claim 13, wherein the network automatic connection mode is a mode for searching for all 2G, 3G, and 4G networks and for connecting to a registerable network among the networks.

17. The method as claimed in claim 11, wherein the making of the connection to the specific network comprises:
camping on a network having a low priority by the portable terminal;
making a change to a network change mode when information on a network having a high priority is not received as the portable terminal camps on the network having the low priority; and
searching for and making connection to the network having the high priority after the network is selected by a user in the network change mode.

18. The method as claimed in claim 17, wherein the making of the change to the network change mode comprises:
determining whether a neighbor cell measurement information message includes information on a neighbor cell for the network having the high priority when the portable terminal receives the neighbor cell measurement information message for the network having the low priority as the portable terminal camps on the network having the low priority;
informing that information on the network having the high priority is not received and displaying a message making an inquiry about a change to the network having the high priority when the neighbor cell measurement information message does not include the information on the neighbor cell for the network having the high priority; and
changing the portable terminal to the network change mode when the change to the network having the high priority is requested.

19. The method as claimed in claim 17, wherein the making of the connection to the network having the high priority comprises:
displaying types of networks in the network change mode; and
searching for and connecting to a network selected from the types of networks by the user.

20. The method as claimed in claim 19, wherein the types of networks comprise an automatic connection mode for searching for all 2G, 3G, and 4G networks and for connecting to a registerable network among the networks, a 2G mode for connection to only the 2G network, a 3G mode for connection to only the 3G network, and a 4G mode for connection to only the 4G network.
